# EUROPÄISCHE PATENTSCHRIFT

(11) **EP 2 597 356 B1**
(45) Veröffentlichungstag und Bekanntmachung des Hinweises auf die Patenterteilung: **03.06.2020**
(21) Anmeldenummer: 12189594.0
(22) Anmeldetag: 23.10.2012
(51) Int. Cl.: F21S 41/43, F21S 41/147, F21S 41/698, F21S 45/43, C08K 3/22, C08K 3/04, C08K 7/06

(54) **Projektionsmodul mit einer Blende aus Kunststoffmaterial**
Projection module having a rotary shade made of plastic material
Module de projection avec un écran en matière synthétique

(30) Priorität: 28.11.2011 DE 102011087245
(43) Veröffentlichungstag der Anmeldung: 29.05.2013
(73) Patentinhaber: Automotive Lighting Reutlingen GmbH, 72762 Reutlingen (DE)
(72) Erfinder: Braun, Stephan, 70771 Echterdingen (DE); Schauwecker, Friedrich, 72793 Pfullingen (DE)
(74) Vertreter: DREISS Patentanwälte PartG mbB

(56) Entgegenhaltungen:
- EP-A1- 1 806 531
- EP-A1- 2 163 814
- EP-A2- 1 477 731
- EP-A2- 2 278 218
- WO-A1-2008/006443
- KR-A- 20090 131 481
- US-A1- 2003 043 586

## Beschreibung

Die vorliegende Erfindung betrifft ein Projektionslichtmodul nach dem Oberbegriff des Anspruchs 1.

Ein solcher Scheinwerfer ist aus der DE 103 40 961 bekannt und weist ein Projektions-Lichtmodul mit einer Lichtquelle, einer Primäroptik, einer Blendenwalze und einer Sekundäroptik auf. Die Primäroptik ist dazu eingerichtet, Licht der Lichtquelle in eine erste Lichtverteilung zu bündeln. Die Blendenwalze ist dazu eingerichtet, die erste Lichtverteilung mit einer quer zur Lichtausbreitung liegenden abschattend wirksamen Blendenkante räumlich zu begrenzen. Dabei ist die Blendenwalze drehbar im Lichtmodul gelagert und so geformt, dass sich je nach Drehstellung der Blendenwalze verschiedene Lagen der abschattend wirksamen Blendenkante ergeben. Die Sekundäroptik ist auf die erste Lichtverteilung fokussiert und dazu eingerichtet, die von der Blendenwalze begrenzte erste Lichtverteilung als zweite Lichtverteilung in das Vorfeld des Scheinwerfers zu projizieren.

Bei dem bekannten Scheinwerfer ist die Blendenwalze ein Druckgussteil aus einer Magnesium-oder Aluminiumlegierung oder sie ist ein langgestreckter Blechhohlkörper, dessen Mantelkontur durch Erzeugen eines inneren Hochdrucks erzeugt wird. Aus der WO 2008/006443 A1 sind Lampenfassungen aus Kunststoff bekannt, der durch Spritzgießen verarbeitet wird und der thermisch leitfähige Zusätze enthält. Die US 2003/0043586 A1 offenbart eine Verwendung eines thermisch gut leitfähigen Kunststoffmaterials für einen Reflektor.

Vom eingangs genannten Stand der Technik unterscheidet sich die vorliegende Erfindung durch, die kennzeichnenden Merkmale des Anspruchs 1.

Durch die Herstellung aus einem auf Kunststoff basierenden Verbundmaterial ist die Blendenwalze, die die Erfindung charakterisiert, leichter als die bekannten, aus Metall bestehenden Blendenwalzen. Dadurch treten in der Lagerung der Blendenwalze bei dem bestimmungsgemäßen Einsatz in einem Kraftfahrzeug geringere Beschleunigungskräfte auf, was die Lagerkräfte damit auch den Verschleiß verringert.

Auch die für eine Verstellung der Blende erforderliche Antriebsleistung sinkt ab, was den Antrieb schont.

Eine solche Blendenwalze lässt sich auch leichter herstellen als die bekannten Walzen aus Metall, da die Verarbeitung von Kunststoffmaterial, insbesondere durch Spritzgießen, weniger aufwändigere Formen erfordert als dies zum Beispiel für Metalldruckgusswalzen der Fall ist. Die Formen müssen zum Beispiel beim Spritzgießen von Kunststoff nicht so temperaturbeständig sein wie beim Metalldruckguss.

Im Vergleich zu durch Druck geformten Blechhohlkörpern ergibt sich der zusätzliche Vorteil, dass sich durch Spritzgießen von Kunststoff feinere Details herstellen lassen, was größere Freiheitsgrade bei der Konstruktion der drehbaren Blendenwalze eröffnet.

Durch eine Erhöhung der Wärmeleitfähigkeit des Verbundmaterials gegenüber dem reinen Kunststoff wird eine Wärmeabfuhr von der Blende in einem Maße verbessert, die erst eine Verwendung von Kunststoffmaterial als Basismaterial der drehbaren Blende möglich macht. Außerdem wird eine gleichmäßige Verteilung der Wärme begünstigt, was dabei hilft, lokale Temperaturspitzen zu vermeiden.

Bei den bisher verwendeten Metallblenden ist die für den Einsatz in Projektionslichtmodulen von Kraftfahrzeugscheinwerfern erforderliche Temperaturbeständigkeit und Formtreue kein Problem.

Anforderungen an die Temperaturbeständigkeit ergeben sich dabei von zwei Seiten: Die Blendenkante liegt sowohl in einem Fokus der Primäroptik als auch in einem Fokus der Sekundäroptik. Die Sekundäroptik verteilt die von der Primäroptik in ein vergleichsweise kleines, im Inneren des Scheinwerfers liegendes Volumen gebündelte Lichtleistung der Lichtquelle breit in das das Vorfeld des Scheinwerfers, um die Fahrbahn zu beleuchten.

Da der Lichtweg umkehrbar ist, bedeutet dies auch, dass die Sekundäroptik von außen einfallende Sonnenstrahlung, sei es sichtbares Licht, UV- oder Infrarotstrahlung, auf den Bereich der Blendenkante fokussiert. Metall hat sich über lange Zeit hinweg als ausreichend formtreu temperaturbeständig und wärmeleitfähig erwiesen um sowohl dem von der Sekundäroptik her erfolgenden Wärmeeintrag als auch dem von der Primärseite her erfolgenden Wärmeeintrag, der von der Lichtquelle stammt, standzuhalten.

Bei Glühlampen wird praktisch die gesamte aufgenommene elektrische Leistung in der Glühwendel in elektromagnetische Strahlung, sei es Infrarotstrahlung, sichtbares Licht oder UV-Strahlung, umgewandelt und durch die Primäroptik in die erste Lichtverteilung fokussiert. Dabei hat sich gezeigt, dass metallische Blenden, die dem damit verbundenen Wärmeeintrag standhalten, auch dem bei tagsüber auftretenden Wärmeeintrag über die Sekundäroptik, der bei parkenden Fahrzeugen mit zur Sonne ausgerichteten Scheinwerfern erheblich sein kann, standhalten. Vor diesem Hintergrund war eine Berücksichtigung der von außen einfallenden Strahlung beim Entwurf von Frontscheinwerfern und bei der Materialauswahl lange unproblematisch.

Mit der allmählichen Einführung von Halbleiterlichtquellen nahm die über die Primäroptik in die erste Lichtverteilung fokussierte Lichtleistung und Strahlungsleistung ab. Dies liegt daran, dass ein Großteil der beim Betrieb der Halbleiterlichtquellen auftretenden Verluste innerhalb des Chips als Wärme freiwerden und damit nur in geringem Umfang über die Primäroptik fokussiert werden.

Allerdings hat sich dann gezeigt, dass eine Verwendung von Kunststoffmaterial für die Blendenanordnung zu Ausfällen führte, die durch von außen einfallende Strahlung bedingt war. Insofern gilt Kunststoff für eine Verwendung als Blendenmaterial als ungeeignet.

Dieses Vorurteil wird durch die Erfindung überwunden, indem der als Basismaterial verwendete Kunststoff durch die Einbettung von Zusätzen zu einem Verbundmaterial umgewandelt wird, das als Folge der eingebetteten Zusätze eine gegenüber dem reinen Kunststoff erhöhte Wärmeleitfähigkeit aufweist. Die erhöhte Wärmeleitfähigkeit ermöglicht eine effizientere Kühlung als dies bei einer Blendenwalze aus reinem Kunststoffmaterial der Fall wäre. Dadurch wird ein Anstieg der Temperatur auf unzulässig hohe Werte vermieden, bei denen sich die Blende verformt und dadurch ihre optischen Eigenschaften ändert oder bei denen eine unzulässig hohe Ausgasung von Material auftritt. Eine solche Ausgasung könnte zu einem Niederschlag auf der Primäroptik oder der Sekundäroptik führen und die optischen Eigenschaften des Projektionsmoduls damit ebenfalls beeinträchtigen.

Durch die Erfindung werden insgesamt Vorteile eines geringeren Gewichts, einer geringeren Belastung von Lagern und Antrieb und eine einfachere und kostengünstigere Fertigung in Verbindung mit einer erhöhten Konstruktionsfreiheit erzielt.

Weitere Vorteile ergeben sich aus den Gegenständen von abhängigen Ansprüchen, der Beschreibung und den beigefügten Figuren.

Es versteht sich, dass die vorstehend genannten und in nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Fahrzeugscheinwerfer als technisches Umfeld der Erfindung;
- Fig. 2: einen Querschnitt durch ein Ausführungsbeispiel eines erfindungsgemäßen Projektionsmoduls;
- Fig. 3: eine perspektivische Darstellung einer Blendenwalze;
- Fig. 4: eine perspektivische Ansicht der Blendenwalze aus der Fig. 3 zusammen mit einem Lagermodul;
- Fig. 5: einen an einer ebenen Fläche reflektierten Lichtstrahl;
- Fig. 6: einen an einer mit einer Aufrauung oder einer Mikrostruktur versehenen Oberfläche reflektierten Lichtstrahl;
- Fig. 7: einen an einer ebenen Fläche reflektierten Lichtstrahl;
- Fig. 8: einen an einer mit Licht abschottenden Formelementen versehenen Fläche reflektierten Lichtstrahl; und
- Fig. 9: verschiedene weitere mögliche Ausgestaltungen von auf der Oberfläche einer Blendenanordnung ausgebildeten lichtabschattenden Formelementen.

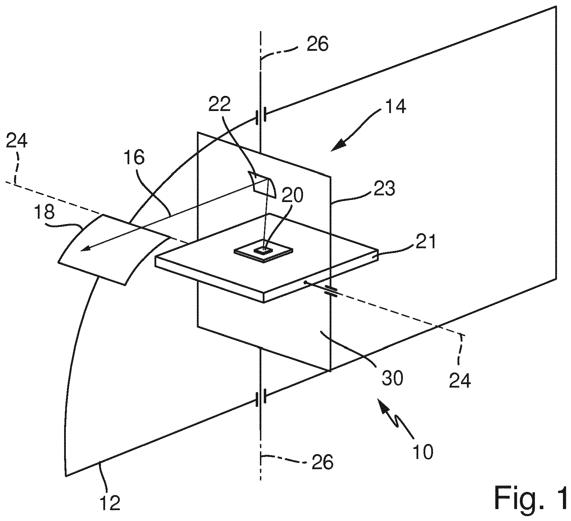

Im Folgenden wird zunächst das technische Umfeld der Erfindung erläutert. Im Einzelnen zeigt die Figur 1 einen Frontscheinwerfer 10 mit einem Scheinwerfergehäuse 12, einem in dem Scheinwerfergehäuse 12 angeordneten Lichtmodul 14 und einer für Licht 16 durchlässigen Abdeckscheibe 18. Das Licht 16 wird von einer Lichtquelle 20 erzeugt, die in der dargestellten Ausgestaltung eine Halbleiterlichtquelle, insbesondere eine Anordnung aus mehreren Leuchtdioden ist und auf einem als Kühlkörper dienenden Trägerelement 21 montiert ist.

Durch wenigstens ein optisches Element 22 wird das von der Halbleiterlichtquelle 20 erzeugte Licht 16 gebündelt und gegebenenfalls zusätzlich beeinflusst, um eine gewünschte Lichtverteilung vor dem Frontscheinwerfer 10 zu erzielen. In der dargestellten Ausgestaltung ist das optische Element 22 ein Reflektor. Alternativ oder ergänzend können Blendenanordnungen und/oder Linsen als optische Elemente verwendet werden, um Reflexionssysteme oder Projektionssysteme zu realisieren und/oder um verschiedene Lichtverteilungen zu erzeugen. Die verschiedenen Lichtverteilungen unterscheiden sich zum Beispiel dadurch, ob sie eine definierte Hell-Dunkelgrenze aufweisen oder nicht und gegebenenfalls darin, wie eine solche Hell-Dunkelgrenze ausgestaltet ist.

In der dargestellten Ausgestaltung ist das Lichtmodul 14 in einem Rahmen 23 kardanisch im Gehäuse 12 aufgehängt. Zur Leuchtweitenregulierung kann es um die waagerechte Achse 24 geschwenkt werden. Eine Schwenkung um eine vertikale Achse 26 erfolgt zur Realisierung einer Kurvenlichtfunktion. Diese Lichtfunktionen und die zu ihrer Erzielung erforderlichen Ausgestaltungen optischer Elemente, Schwenkantriebe und Steuerelemente sind dem Fachmann vertraut und bedürfen daher an dieser Stelle keiner weiteren Erläuterung.

Das Trägerelement 21 ist um die horizontale Achse schwenkbar in dem Rahmen 23 aufgehängt. Der Rahmen 23 ist um die vertikale Achse 26 schwenkbar in dem Gehäuse 12 oder einem Rahmen innerhalb des Gehäuses 12 aufgehängt. Mit dem Trägerelement verbunden sind dabei insbesondere die optischen Elemente 22, so dass diese jeweils mitgeschwenkt werden. Die Richtungsangaben horizontal und vertikal beziehen sich dabei auf eine Orientierung im Raum bei einer bestimmungsgemäßen Verwendung in einem Kraftfahrzeug.

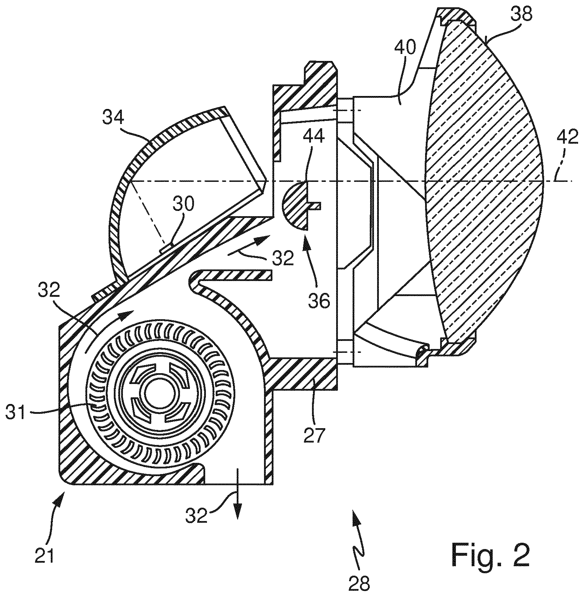

Die Fig. 2 zeigt ein Ausführungsbeispiel eines Projektionslichtmoduls, das eine Blendenwalze aufweist. Dabei zeigt die Figur 2 ein Lichtmodul 28, das beim Gegenstand der Figur 1 das Lichtmodul 14 ersetzt. In Verbindung mit den übrigen Merkmalen des Gegenstands der Figur 1 ergibt das Lichtmodul 28 ein Ausführungsbeispiel eines Frontscheinwerfers. Das Lichtmodul 28 ist in einem entlang seiner optischen Achse vollzogenen Längsschnitt dargestellt.

Im Einzelnen weist das Lichtmodul 28 eine Halbleiterlichtquelle 30 und ein Trägerelement 21 auf, das in der dargestellten Ausgestaltung thermisch mit der Halbleiterlichtquelle gekoppelt ist und das ein Gebläse 31 mit einem Gebläsegehäuse aufweist, das einen Wärme von der Halbleiterlichtquelle 30 abführenden Luftstrom 32 erzeugt.

Dabei wird die Kühlluft von dem Gebläse 31 aus einer zur Zeichnungsebene senkrechten Richtung angesaugt.

Bei einer bevorzugten Ausgestaltung werden neben der Halbleiterlichtquelle 30 weitere Komponenten des Lichtmoduls 28 an der kompakten und stabilen Struktur des Trägerelements 21 befestigt. Beim Gegenstand der Fig. 2 sind dies optische Elemente in Form eines Reflektors 34, eine Blendenwalze 36 mit ihrem Antrieb, insbesondere einem Elektromotor, und eine Projektionslinse 38, die über einen Linsenträger 40 an dem Trägerelement 21 befestigt ist.

Die von der Halbleiterlichtquelle 30 erwärmte Luft wird in der dargestellten Ausgestaltung in Richtung zur Projektionslinse 38 geblasen, wobei sie an der Blendenwalze 36 vorbeistreicht. Das Lichtmodul ist also dazu eingerichtet, einen von einem Gebläse erzeugten Kühlluftstrom so zu führen, dass die Blende zumindest zu einem Teil in dem Kühlluftstrom liegt. Dies liefert den zusätzlichen Vorteil, dass die aufgeheizte Kühlluft Feuchtigkeit, die bei wechselnden Temperaturen und/oder Luftfeuchtigkeiten im Frontscheinwerfer kondensieren kann, aufnimmt und mit dem Luftstrom aus dem Frontscheinwerfer herausträgt.

Mit der zur Projektionslinse geblasenen Luft ist weiter der Vorteil verbunden, dass diese Luft an der Blendenwalze vorbeistreicht und damit Wärme von der Blendenwalze abführen kann, wenn sich diese aufgeheizt haben sollte.

Es ist daher bevorzugt, dass das Projektionsmodul ein Kühlgebläse aufweist und dass wenigstens ein Teil der vom Kühlluftgebläse geförderten Kühlluft so geführt wird, dass sie zumindest auch Wärme von der Blendenwalze abführen kann.

Darüber hinaus zeigt die Fig. 2 eine Aufteilung der Gebläseabluft auf mehrere Teilströme 32, wodurch zum Beispiel zusätzlich benachbarte Wärmequellen mitgekühlt werden können. Benachbarte Wärmequellen können zum Beispiel ein Lichtfunktionen steuerndes Steuergerät des Scheinwerfers und/oder eine zugehörige Endstufenanordnung sein, wobei diese Aufzählung nicht abschließend sein soll.

Bei der vorliegenden Erfindung geht es um die Blendenwalze 36. Die Blendenwalze ist allgemein ein Teil eines Projektionssystems und ist dort zwischen einer Primäroptik, hier dem Reflektor 34, und einer Sekundäroptik, hier der Projektionslinse 38 angeordnet.

Die Primäroptik bündelt Licht einer Lichtquelle, hier der Halbleiterlichtquelle 30, in ein kleines Volumen innerhalb des Lichtmoduls 28, das sich auf der Höhe der optischen Achse 42 im Lichtweg zwischen der Primäroptik und der Sekundäroptik befindet. Mit anderen Worten: Die Primäroptik ist auf das kleine Volumen fokussiert. Dies leistet zum Beispiel ein Ellipsoidreflektor, in dessen einem Brennpunkt sich die Lichtquelle und in dessen anderen Brennpunkt, beziehungsweise Brennbereich sich das kleine Volumen befindet. Die Sekundäroptik ist ebenfalls auf das kleine Volumen fokussiert und bildet die sich in dem kleinen Volumen einstellende Lichtverteilung in das Vorfeld des Lichtmoduls ab.

Eine Blendenkante 44, die sich innerhalb des kleinen Volumens befindet, wird dann durch die Sekundäroptik als Hell-Dunkel-Grenze in der in das Vorfeld projizierten Lichtverteilung abgebildet. In einer bevorzugten Ausgestaltung ist die Blendenwalze 36 um eine horizontale, senkrecht zur optischen Achse verlaufende Drehachse drehbar gelagert und weist auf ihrem Umfang verschiedene Konturen auf, die durch die Sekundäroptik auf die Straße projiziert werden und dabei verschiedene Hell-Dunkel-Grenzen darstellen.

Die Blendenwalze 36 besteht aus einem Verbundmaterial, das seinerseits aus Kunststoff mit in den Kunststoff eingebetteten Zusätzen besteht, wobei die Zusätze solche sind, die die Wärmeleitfähigkeit des Verbundmaterials gegenüber der Wärmeleitfähigkeit des reinen Kunststoffs erhöhen.

Als Zusätze werden bevorzugt Kohlefasern und/oder Metalloxide verwendet, letztere insbesondere in Pulverform.

Als Grundmaterial für den Verbundwerkstoff kommt ein Polyetherimid (PEI)- Kunststoff wie Ultem in Frage. Polyetherimid (PEI) im allgemeinen und so auch Ultem zeichnet sich durch eine ausreichende Temperaturfestigkeit und eine sehr geringe Ausgasung aus. Die geringe Ausgasung hat den Vorteil, dass sich auch über der jahrelangen Betriebszeit in Kraftfahrzeugen keine Verschlechterung der optischen Eigenschaften durch eine Kondensation von ausgegastem Material auf einer Reflexionsfläche oder einer Transmissionsfläche des Projektionsmoduls ergibt.

Ultem ist ein Polyetherimid (PEI) und damit ein zur Gruppe der hochtemperaturbeständigen Kunststoffe zählender Hochleistungsthermoplast. Polyetherimid wird in reiner Form und mit verschiedenen Zusätzen angeboten. Es ist sehr beständig gegenüber UV-Strahlen und lässt sich im Spritzgießverfahren verarbeiten. Die Verarbeitungstemperatur liegt je nach Typ zwischen 320 und 400 °C, bei einer Werkzeugtemperatur zwischen 120 und 180 °C.

Durch die als Folge der Zusätze erhöhte Wärmeleitfähigkeit des Verbundwerkstoffes kann sich die aufgenommene Wärme gleichmäßig über das ganze Volumen der Blendenwalze verteilen und über die an den beiden Enden der Blendenwalzen angeordneten Lager und/oder an die Umgebungsluft im Projektionsmodul abgegeben werden.

Die Zusätze werden bevorzugt so klein gemahlen, dass sie zusammen mit dem Kunststoffmaterial in einem Spritzgussvorgang gemeinsam verarbeitet werden können.

Die Fig. 2 zeigt damit insbesondere ein Projektions-Lichtmodul 28, das eine Lichtquelle 30, einen Reflektor 34 als Primäroptik, eine Blendenwalze 36 und eine Projektionslinse 38 als Sekundäroptik aufweist, wobei die Primäroptik dazu eingerichtet ist, Licht der Lichtquelle 30 in eine erste Lichtverteilung zu bündeln, die Blendenwalze 36 dazu eingerichtet ist, die erste Lichtverteilung mit einer quer zur Lichtausbreitung liegenden abschattend wirksamen Blendenkante 44 räumlich zu begrenzen, wobei die Blendenwalze 36 drehbar und so geformt ist, dass sich je nach Drehstellung der Blendenwalze 36 verschiedene Lagen der abschattend wirksamen Blendenkante 44 ergeben, und wobei die Sekundäroptik auf die erste Lichtverteilung fokussiert und dazu eingerichtet ist, die von der Blendenwalze 36 begrenzte erste Lichtverteilung als zweite Lichtverteilung in das Vorfeld des Projektionsmoduls und damit letztlich auf die Straße vor dem Kraftfahrzeug zu projizieren. Dabei besteht die Blendenwalze 36 aus einem Verbundmaterial aus Kunststoff mit in den Kunststoff eingebetteten Zusätzen, wobei die Zusätze die Wärmeleitfähigkeit des Verbundmaterials gegenüber dem reinen Kunststoff erhöhen.

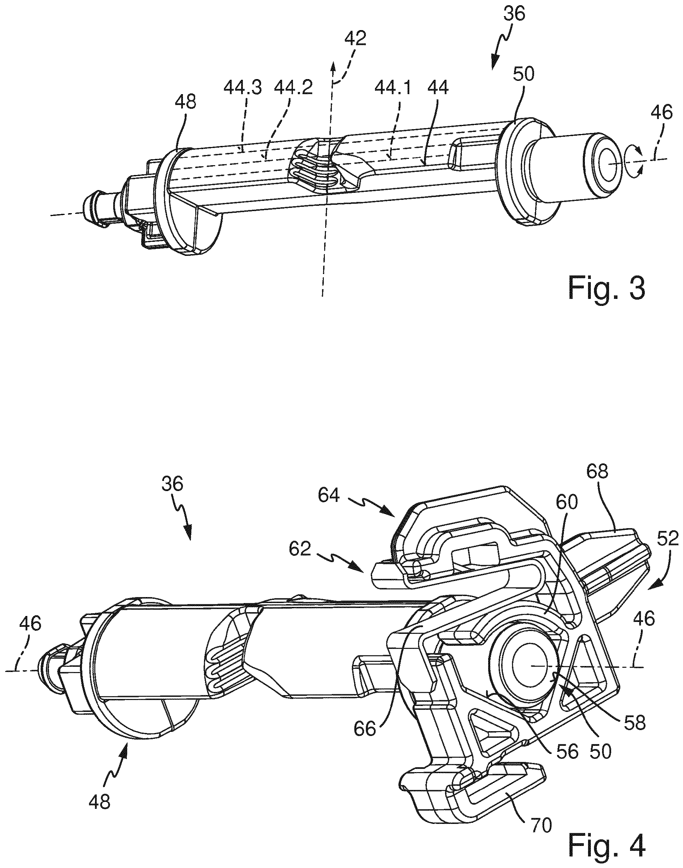

Fig. 3 zeigt eine perspektivische Darstellung einer Blendenwalze 36 mit einer Drehachse 46, um die herum die Blendenwalze durch einen Antrieb in verschiedene Drehstellungen drehbar ist. Die Drehachse 46 liegt senkrecht zu der optischen Achse 42, die auch in etwa einer Hauptlichtabstrahlrichtung des Projektionsmoduls entspricht. Die Blendenwalze wird etwa auf ihrer ganzen, zwischen den Enden 48, 50 liegenden Länge durch die Primäroptik beleuchtet, wobei sich die Breite der Beleuchtung, also die Ausdehnung der Beleuchtung in Richtung eines Durchmessers der Blendenwalze auf den zwischen der Drehachse 46 und einer auf dem Mantel der Blendenwalze liegenden Blendenkante 44 beschränkt.

Der unterhalb der Blendenkante 44 liegende Bereich der Lichtverteilung oder Beleuchtung wird daher durch die Blendenwalze 36 abgeschattet und erscheint als dunkler Bereich in der auf die Straße projizierten Lichtverteilung. Durch eine von einer Zylindermantelfläche abweichende Strukturierung der Mantelfläche der Blendenwalze 36 ergeben sich verschiedene Blendenkanten 44, 44.1. 44.2, 44.3, die sich jeweils durch Hineindrehen in die Beleuchtung der Blendenwalze einstellen lassen. Die jeweilige Form der jeweils eingestellten Blendenkante bildet sich als Hell-Dunkel-Grenze in der auf die Straße projizierten Lichtverteilung ab.

Die Blende liegt damit sowohl im Fokus der Primäroptik als auch im Fokus der Sekundäroptik. Das kleine Volumen, in das die Primäroptik das Licht fokussiert hat eine Fläche, die typischerweise kleiner bis gleich der Querschnittsfläche der Blendenwalze bei einem längs ihrer Drehachse erfolgenden Schnitt ist. Dies ist in einem Beispiel ein Fläche von etwa ca. 50 mm * 10 mm.

Das aus diesem kleinen Querschnitt austretende Licht wird durch die Sekundäroptik in die breite Lichtverteilung auf der Fahrbahn gestreut.

Das bedeutet umgekehrt, dass von außen über die Sekundäroptik in das Projektionslichtmodul einfallende Strahlung, also nicht nur sichtbares Licht, sondern auch Infrarot und Ultraviolettstrahlung, entsprechend stark fokussiert wird. Diese Fokussierung kann zu den weiter oben erwähnten thermischen Belastungen führen. Herkömmlicher Kunststoff hält diesen Belastungen unter ungünstigen Umständen, also bei hoher Strahlungsbelastung, nicht stand.

Um trotzdem die mit der Verwendung von Kunststoff einhergehenden Vorteile nutzen zu können, wird die Blendenwalze erfindungsgemäß aus einem Verbundmaterial aus Kunststoff mit in den Kunststoff eingebetteten Zusätzen verwirklicht, wobei die Zusätze die Wärmeleitfähigkeit des Verbundmaterials gegenüber dem reinen Kunststoff erhöhen.

Das Trägerelement ist dazu eingerichtet, mit einer Halbleiterlichtquelle, einem Reflektor, einer Aufnahme für eine Blende, und einem Linsenhalter verbunden zu werden. Wenn es sich bei dem Lichtmodul um ein sogenanntes Kurvenlichtmodul, also ein im eingebauten Zustand nach rechts und links schwenkbares Lichtmoduls handelt, muss das Trägerelement zusätzlich noch dazu eingerichtet sein, Teile von Gelenken wie Lagerstifte oder Lagerhülsen für die Verwirklichung einer Kurvenlichtfunktion bereitzustellen.

Da gleichzeitig eine kompakte Bauweise gefordert ist, ergeben sich komplizierte Formen für das Trägerelement, die sich als metallische einstückige Struktur nur schwer verwirklichen lassen.

Die erfindungsgemäße Ausgestaltung löst diesen Zielkonflikt, der durch die Forderungen nach der Bereitstellung zahlreicher Befestigungsgeometrien bei gleichzeitiger kompakter Bauweise bedingt ist, dadurch, dass das Trägerelement eine erste Trägerstruktur aus Metall und eine zweite Trägerstruktur aus einem Kunststoff oder einem auf Kunststoff basierenden Verbundmaterial aufweist, wobei ein Teil der ersten Trägerstruktur in das Material der zweiten Trägerstruktur fest und nicht zerstörungsfrei lösbar eingebettet ist.

Aufgrund dieses aus zwei unlösbar miteinander verbundenen Komponenten bestehenden Aufbaus kann ein solches Trägerelement auch als Hybridkühlkörper bezeichnet werden. Dadurch, dass die erste Trägerstruktur aus Metall besteht, wird eine ausreichend feste und formstabile Basis für das Trägerelement bereitgestellt. Das metallische Material erlaubt darüber hinaus aufgrund seiner hohen Temperaturbeständigkeit und Wärmeleitfähigkeit eine zuverlässige und ausreichende Kühlung der Halbleiterlichtquelle.

Dadurch, dass die zweite Trägerstruktur aus einem Kunststoff oder aus einem auf Kunststoff basierenden Verbundmaterial besteht, kann die zweite Trägerstruktur im Vergleich zu einer metallischen Struktur mit wesentlich weniger Aufwand hergestellt werden, was insbesondere bei der Erzeugung kompakter Befestigungsgeometrien oder anderer komplizierter Formen und Strukturen von großem Vorteil ist.

Eine bevorzugte Ausgestaltung zeichnet sich dadurch aus, dass der eingebettete Teil der ersten Trägerstruktur durch Umspritzen dieses Teils mit Material der zweiten Trägerstruktur in das Material der zweiten Trägerstruktur eingebettet ist.

Dadurch, dass ein Teil der ersten Trägerstruktur durch Umspritzen dieses Teils mit Material der zweiten Trägerstruktur in die zweite Trägerstruktur fest und nicht zerstörungsfrei lösbar eingebettet ist, werden die genannten Nachteile der Schraubverbindungen vermieden. Das Umspritzen kann zum Beispiel in einer durch das Spritzwerkzeug genau vorgegebenen Relativposition beider Strukturen zueinander erfolgen, bei der nur Toleranzen auftreten, die wesentlich kleiner sind als die bei Schraubverbindungen zu erwartenden Toleranzen. Bauraum für Schraubverbindungen und für eine Zugänglichkeit solcher Schraubverbindungen für Werkzeug muss dabei nicht freigehalten werden.

Bevorzugt ist auch, dass die erste Trägerstruktur Vorsprünge und/oder Ausnehmungen aufweist, die beim Aushärten des Materials der zweiten Trägerstruktur einen Formschluss mit dem sie umgebenden Material der zweiten Trägerstruktur eingehen.

Ferner ist vorgesehen, dass die zweite Trägerstruktur ein auf Kunststoffmaterial basierendes Verbundmaterial enthält, das eine Wärmeleitfähigkeit besitzt, die größer ist als die Wärmeleitfähigkeit des Kunststoff-Basismaterials.

Bevorzugt ist auch, dass ein Polyetherimid (PEI)-Kunststoff ein Basismaterial für den Verbundwerkstoff ist.

Eine weitere Ausgestaltung zeichnet sich durch Ultem als Basismaterial für den Verbundwerkstoff aus.

Bevorzugt ist auch, dass der Verbundwerkstoff Kohlefasern und/oder Metalloxide als Zusätze enthält.

Die Figur 4 zeigt eine perspektivische Ansicht der Blendenwalze 36 aus der Fig. 3 zusammen mit einem Lagermodul 52, in dem ein Ende 50 der Blendenwalze 36 drehbar gelagert ist. Das Ende 50 ist als Lagerzapfen 54 ausgestaltet. Der Lagerzapfen besitzt in einer bevorzugten Ausgestaltung einen Durchmesser von 6 mm bis 8 mm.

Das andere Ende 48 der Blendenwalze 36 ist dazu eingerichtet, mit einem Blendenantrieb verbunden zu werden, der in der Fig. 4 nicht dargestellt ist. Die Verbindung erfolgt zum Beispiel durch Verrasten von Formschlusselementen des Endes 48 der Blendenwalze 36 mit einem Abtrieb des Antriebs.

Das Lagermodul 52 weist eine erste Lagerfläche 56 und eine zweite Lagerfläche 58 auf, die zusammen eine Aufnahme für den Lagerzapfen 54 bilden. Die beiden Lagerflächen 56 und 58 sind so angeordnet, dass sie einen Winkel einschließen. Sie sind Oberflächen von entsprechend angeordneten Teilvolumina des Lagermoduls 52, die mit anderen Teilvolumina des Lagermoduls 52 bevorzugt eine stoffschlüssige Einheit bilden. Die beiden Teilvolumina und ihre Lagerflächen 56, 58 bilden dadurch eine Aufnahme in der Form eines Prismas.

Die Größe des Winkels liegt bevorzugt zwischen 70° und 110°. In einer besonders bevorzugten Ausgestaltung ist der Winkel ein rechter Winkel. Dies ergibt eine stabile Lagerung bei kompakten Abmessungen. Die Lagerflächen besitzen in einer bevorzugten Ausgestaltung eine Breite von 4 bis 8 mm und eine Länge von 5 mm bis 10 mm. Dabei erstreckt sich die Breite in Richtung der Drehachse 46 der Blendenwalze 36, während sich die Länge jeweils in Richtung von Tangenten an den Lagerzapfen 54 erstreckt.

Im zusammengebauten Zustand liegt der Lagerzapfen 54 drehbar in der prismatischen Aufnahme. Um den Lagerzapfen 54 sicher in der Aufnahme zu halten, weist das Lagermodul 52 ferner ein erstes elastisches Element 60 auf. Das erste elastische Element 60 ist dazu eingerichtet, eine Kraft auf den in der Aufnahme liegenden Lagerzapfen 54 auszuüben, die diesen in die Richtung des Scheitels des von den beiden Lagerflächen 56, 58 eingeschlossenen Winkels hineindrückt.

Das erste elastische Element 60 ist bevorzugt ebenfalls ein stoffschlüssig mit der prismatischen Aufnahme, also mit den genannten, von den Lagerflächen 56, 58 begrenzten Teilvolumina und weiteren Teilvolumina des Lagermoduls 52 zusammenhängender Teil. Bevorzugt ist auch, dass das erste elastische Element 60 von einer der beiden Lagerflächen ausgehend zungenartig in den freien Raum zwischen den beiden Lagerflächen 56, 58 hineinragt. Dabei ist das erste elastische Element 60 in einem Abstand von dem Scheitel des von den beiden Lagerflächen 56, 58 eingeschlossenen Winkels angeordnet, in dem es bei einem Einsetzen des Lagerzapfens 54 in die Aufnahme von der Mantelfläche des Lagerzapfens 54 aus seiner Ruhelage ausgelenkt wird, so dass eine elastische Rückstellkraft generiert wird. Das Einsetzen des Lagerzapfens 54 erfolgt dabei bevorzugt in axialer Richtung etwa längs der Drehachse 46 der Blendenwalze 36.

Bevorzugt ist auch, dass das elastische Element 60 auf seiner dem Scheitel zugewandten Seite konkav gekrümmt ist. Durch die konkave Krümmung liegt der Kontakt zwischen dem elastischen Element 60 und dem in der prismatischen Aufnahme liegenden Lagerzapfen 54 weiter in der Mitte zwischen den beiden Lagerflächen als dies bei einem nicht gekrümmten elastischen Element der Fall wäre. Damit liegt auch die Richtung der Kraft, mit der das elastische Element 60 den Lagerzapfen 54 in die prismatische Aufnahme hineindrückt, näher an der Winkelhalbierenden der prismatischen Aufnahme als dies bei einem nicht gekrümmten elastischen Element der Fall wäre. Es ergibt sich auf jeden Fall eine gute Zentrierwirkung des ersten elastischen Elements 60 auf den in der Aufnahme liegenden Lagerzapfen 54. Außerdem trägt der gekrümmte Verlauf dazu bei, dass der Bauraumbedarf niedrig gehalten wird.

Im Ergebnis liegt damit eine Lagerung vor, mit der der Lagerzapfen 54 in radialer Richtung, aber nicht in axialer Richtung abgestützt wird. Es handelt sich daher um ein Loslager. Eine Abstützung in axialer Richtung erfolgt bei dieser Ausgestaltung bevorzugt an dem anderen Ende 48 der Blendenwalze 36, die dort mit einem Antrieb drehfest verbunden, insbesondere verrastet ist. Der Antrieb erfolgt bevorzugt durch einen Elektromotor mit Lagerückmeldung. Bei dieser Art der Lagerung der Blendenwalze 36 wird das Ende 48 der Blendenwalze 36 radial und axial abgestützt. Es handelt sich also um ein Festlager.

In einer bevorzugten Ausgestaltung, wie sie in der Fig. 4 dargestellt ist, weist das Lagermodul 52 zusätzlich zu dem stoffschlüssig mit der Aufnahme verbundenen ersten elastischen Element 60 noch ein zweites elastisches Element 62 auf, das dazu eingerichtet und angeordnet ist, die Andruckkraft des konkav gekrümmten ersten elastischen Elements 60 zu verstärken.

Dazu stützt sich das zweite elastische Element 62 in der dargestellten Ausgestaltung an dem ersten elastischen Element 60 ab. Das zweite elastische Element 62 stützt sich dabei bevorzugt und wie in Fig. 4 dargestellt ist, an der Seite des ersten elastischen Elements 60 ab, die derjenigen Seite des ersten elastischen Elements 60 gegenüberliegt, mit der das erste elastische Element 60 seine Andruckkraft auf den Lagerzapfen 54 ausübt.

Ferner stützt sich das zweite elastische Element 62 in der dargestellten Ausgestaltung andererseits an einem Widerlagerarm 64 ab, der ebenfalls ein mit den genannten Teilvolumina der Aufnahme stoffschlüssig verbundenes Teilvolumen des der Aufnahme bildet. Durch seine Materialstärke und seine geometrische Ausgestaltung weist der Widerlagerarm 64 jedoch eine größere Steifigkeit auf als das erste elastische Element 60.

In der Ausgestaltung, die in der Figur 4 dargestellt ist, weist der Widerlagerarm 64 ein T-Profil auf. Der Widerlagerarm 64 und das erste elastische Element 60 sind bevorzugt so angeordnet, dass sie auf der gleichen Seite aus dem übrigen Material des Teils des Lagermoduls 52 herausragen, das die Aufnahme für den Lagerzapfen 54 bildet und etwa in die gleiche Richtung weisen. Dabei können sie parallel zueinander ausgerichtet oder einen Winkel einschließen, der verhältnismäßig spitz ist. Der Winkel ist insbesondere kleiner als 20°. Bei größeren Winkeln würden elastische Kraftkomponenten des in der Fig. 4 dargestellten zweiten elastischen Elements 62, die in unerwünschte, nicht zentrierend wirkende Richtungen weisen, in einer unerwünschten Größe auftreten. Dass überhaupt ein Winkel vorgesehen ist liegt an der aus dem Winkel resultierenden Erleichterung der Montage.

Das zweite elastische Element 64 ist bevorzugt als metallisches Federblechteil 66 oder metallisches Federdrahtteil verwirklicht, das eine u- oder v-förmige Gestalt besitzt und mit seiner geschlossenen Seite, also dem Boden des u oder der Seite des v, in die von dem ersten elastischen Element 60 und dem Widerlagerarm 64 gebildete Lücke unter Vorspannung hineinpasst. Bevorzugt ist auch, dass das zweite elastische Element 62 und der Widerlagerarm 64 und/oder das erste elastische Element 60 zueinander komplementäre Rastelemente aufweisen, mit denen das zweite elastische Element 62 mit dem Widerlagerarm 64 und/oder dem ersten elastischen Element 60 verrastet und damit gegen ein unbeabsichtigtes Herausfallen gesichert wird.

Im Ergebnis wird damit ein durch die elastischen Elemente spielfrei verspanntes Gleitlager für die Blendenwalze 36 bereitgestellt. Das verspannte Gleitlager ist dabei in der dargestellten Ausgestaltung ein federbelastetes Prismenlager.

In der dargestellten Ausgestaltung ist das Lagermodul 52 ein von dem zweiten Teil 27 des Trägerelements 21 separates Teil, das jedoch mit dem zweiten Teil 27 des Trägerelements fest verbunden wird. Der zweite Teil 27 dient, wie weiter oben ausgeführt wurde, auch zur Aufnahme und Lagerung der Blendenwalze. In einer bevorzugten Ausgestaltung erfolgt die Verbindung des zweiten Lagermoduls 52 mit dem zweiten Teil 27 des Trägerelements 21 durch eine Rastverbindung. Zu diesem Zweck weist das Lagermodul 52 in der Ausgestaltung, die in der Fig. 4 dargestellt ist, Rastelemente 68 und 70 auf, die mit entsprechend komplementär ausgestalteten Rastelementen des zweiten Teils 27 des Trägerelements 21 verrasten.

Das Lagermodul 52 kann aber auch ein einstückiger Bestandteil des zweiten Teils 27 des Trägerelements 21, beziehungsweise des Trägerelements 21 sein. In diesem Fall ist bevorzugt, dass das Lagermodul dadurch erzeugt wird, dass ein Abschnitt des Trägerelements 21 oder des zweiten Teils 27 des Trägerelements 21 in eine Spritzgussform des Lagermoduls eingelegt und mit Material des Lagermoduls umspritzt wird, wobei das Lagermodul 52 bevorzugt aus einem gut als Gleitlager geeigneten Kunststoffmaterial besteht.

Um eine möglichst große Wärmeübergangsfläche zu der Luft bereitzustellen, ist es bevorzugt, den zweiten Teil 27 des Trägerelements 21 aus einem gut wärmeleitfähigen Kunststoff oder einem Kunststoffverbundmaterial herzustellen. Der zweite Teil 27 kann dann Wärme sowohl von der Blendenwalze 36 als auch von dem ersten Teil 25 aufnehmen und weiterleiten und so insbesondere Kühlkörperfunktionen übernehmen.

Durch die Verwirklichung des Lagermoduls 52 und des zweiten Teils 27 des Trägerelements 21 als separate Bauteile oder als aus zwei oder mehr Materialien bestehendes Mehrkomponenten-Spritzgussteil kann jedes dieser Bauteile aus einem für seine jeweilige Verwendung optimalen Material hergestellt werden. Der zweite Teil wird in einer Ausgestaltung aus einem gut wärmleitenden Kunststoffmaterial wie es weiter oben bereits beschrieben wurde, hergestellt. Bei dem Material handelt es sich bevorzugt um das gleiche Material, aus dem auch die Blendenwalze 36 hergestellt wird. Ein solches Verbundmaterial hat jedoch unter Umständen abrasive Eigenschaften. Es wäre daher verschleißintensiv, wenn die Blendenwalze direkt in dem Material des zweiten Teils 27 des Trägerelements gelagert werden würde.

Das Lagermodul 52 besteht bevorzugt aus einem gut als Gleitlager geeigneten Kunststoffmaterial, so dass die abrasiven Materialen der Blendenwalze und des Trägerelements 21 keinen Reibungskontakt miteinander haben. Dieses Kunststoffmaterial ist bevorzugt ein Material, das verschleißarm und temperaturbeständig ist.

Das Lagermodul wird also bevorzugt mit dem ersten Trägerelement 21 verrastet. Die resultierende verspannte Gleitlagerung lässt Achsfluchtungsfehler, wie sie insbesondere beim Kunststoffspritzguss auftreten können, zu, ohne dass dafür ein erhöhtes Spiel in Kauf genommen werden muss. Im Gegenteil, durch die elastisch verspannte Lagerung wird sogar eine Spielfreiheit erreicht.

Dadurch werden auch Auswirkungen von Temperaturschwankungen auf das Lagerspiel ausgeglichen, wie sie typischerweise im Scheinwerfer auftreten können. Die unterstützende Wirkung des zweiten elastischen Elements kompensiert ein gegebenenfalls auftretendes Ermüden des Kunststoffes des ersten elastischen Elements unter dem Einfluss von hoher Temperatur.

Die Oberfläche der Blendenwalze mit den verschiedenen Blendenkanten ist bevorzugt so ausgestaltet, dass sich die Hell-Dunkel-Grenze beim Verstellen der Blende kontinuierlich, insbesondere kontinuierlich und monoton, von ihrer Ausgangslage in ihre neue Lage bewegt. Dadurch werden abrupt erfolgende Änderungen der hell und dunkel erscheinenden Bereiche der resultierenden Lichtverteilung vermieden. Solche Änderungen könnten sonst zu kurzzeitigen Blendungen und Irritationen führen, zum Beispiel dann, wenn beim Wechsel zwischen zwei verschieden hoch liegenden Hell-Dunkel-Grenzen zwischenzeitlich ein Drehwinkelbereich der Blendenwalze durchlaufen werden würde, in dem keine Hell-Dunkel-Grenze erzeugt wird, oder wenn beim Übergang zwischen zwei horizontal eher niedrig liegenden Hell-Dunkel-Grenzen zwangsläufig eine höher liegende Hell-Dunkel-Grenze eingestellt werden würde.

Beim Gegenstand der Figur 3 wird die Blendenwalze 36 an dem einen Ende 50 in einem verspannten Loslager drehbar gelagert und an dem anderen Ende 48 mit einem Antrieb drehfest verrastet. Eine bevorzugte Ausgestaltung eines verspannten Loslagers wird weiter unten noch in Verbindung mit der Figur 4 erläutert.

Das andere Ende 48 wird bevorzugt in einem Abtriebszahnrad des nicht dargestellten Antriebs drehbar verrastet. Dabei ist bevorzugt, dass die Lagerung des Endes 48 in dem Antrieb als Festlager ausgeführt ist. In einer bevorzugten Ausgestaltung ist das Abtriebszahnrad ein Kunststoffzahnrad oder weist zumindest einen Kunststoffring oder eine Kunststoffscheibe auf. Bevorzugt ist auch, dass das Abtriebszahnrad oder der aus Kunststoff bestehende Teil des Abtriebszahnrads einen Kunststoff-gebundenen Magneten aufweist. Ein solcher Kunststoff-gebundener Magnet wird dadurch erzeugt, dass Magnetwerkstoffe pulverisiert, mit Kunststoffgranulat vermischt und zum Beispiel durch Extrudieren, Pressen oder Spritzgießen in die gewünschte Form, hier die Form eines Zahnrades, gebracht werden. Bei der Fertigung wird in einem Zustand, in dem die Magnetwerkstoffteilchen bereits in den Kunststoff eingebettet sind, aber dort noch ausrichtbar sind, eine vorbestimmte Magnetisierungsrichtung durch Anlegen eines Magnetfeldes erzeugt, die dann beim weiteren Erstarren des Kunststoffes eingefroren wird. Im Fall der Blendenwalze 36 sieht eine bevorzugte Ausgestaltung einen in das Abtriebszahnrad des Blendenantriebs eingebetteten Ringmagneten vor, dessen einer Pol sich bevorzugt über einen Drehwinkelbereich von circa 75° bis 85° erstreckt.

Im Zusammenwirken mit einem Hall-Sensor, der sich nicht mit der Blendenwalze 36 dreht und im Magnetfeld des Ringmagneten angeordnet ist, ergeben sich so zwei Signalflanken in dem angegebenen Winkelbereich. In Verbindung mit der Verwendung eines Schrittmotors als Antrieb für das Zahnrad reicht dies aus, um in dem circa 180° umfassenden Verstellbereich der Blende, in dem Hell-Dunkel-Grenzen erzeugt werden, verschiedene Blendenkanten gegebenenfalls durch Abzählen von Verstellschritten hinreichend genau einstellen zu können. Die anderen 180° liefern in der dargestellten Ausgestaltung ein Fernlicht ohne Hell-Dunkel-Grenze.

Bei Scheinwerfern mit einer Blendenwalze kann es durch in einem bestimmten Winkel auf die Oberfläche der Blendenwalze auftreffende Lichtstrahlen zu ungewollten Reflexen kommen, die oberhalb der Hell-Dunkel-Grenze einer abgeblendeten Lichtverteilung unerwünscht helle Bereiche erzeugen. Dies ist insbesondere dann der Fall, wenn Flächen der Blendenwalze vor der eigentlichen Blendenebene liegen und Reflexionen erzeugen. Solche unerwünschten Reflexe (Intensitätsmaxima) können den Fahrer irritieren und auch zu einer Blendung anderer Verkehrsteilnehmer führen, so dass der Scheinwerfer die gesetzlichen Anforderungen nicht erfüllt. Generell spiegeln auch Flächen, die zum Beispiel schwarz sind, auch unter flachen Winkeln auftreffende Lichtstrahlen.

In einer bevorzugten Ausgestaltung geht es darum, Reflexe, insbesondere solche, die zu unerwünschten Intensitätsmaxima oberhalb der Hell-Dunkel-Grenze einer abgeblendeten Lichtverteilung führen, zu verringern oder zu vermeiden.

Andererseits ist es vorteilhaft, wenn bestimmte Bereiche oberhalb einer Hell-Dunkel-Grenze noch definiert beleuchtet werden, um zum Beispiel Verkehrsschilder gut erkennen zu können. Eine solche, in definierten Bereichen der Lichtverteilung herrschende definierte Beleuchtung wird auch als Sign-Light oder Overhead-Beleuchtung bezeichnet.

Eine bevorzugte Ausgestaltung der Blende zeichnet sich dadurch aus, dass die Oberfläche der Blendenwalze 36 in dem Bereich, in dem die zur Erzeugung von Hell-Dunkel-Grenzen dienenden Blendenkanten liegen, zumindest teilweise mit Licht streuenden und/oder Licht absorbierenden Elementen versehen sind. Diese Elemente sind bevorzugt so ausgestaltet und angeordnet, dass sich in einem Bereich der Lichtverteilung oberhalb der Hell-Dunkel-Grenze eine geringere Helligkeit ergibt, als wenn die Licht streuenden und/oder Licht absorbierenden Elemente nicht vorhanden wären.

Alternativ oder ergänzend sind die Elemente so ausgestaltet und angeordnet, dass sich eine definierte Beleuchtung definierter Bereiche oberhalb der Hell-Dunkel-Grenze ergibt.

Eine besonders bevorzugte Ausgestaltung zeichnet sich durch eine Ausgestaltung und Anordnung von Licht streuenden und/oder Licht absorbierenden Elementen aus, bei denen Reflexe verhindert oder verringert werden, die durch flach auf die Oberfläche der Blendenwalze auftreffende Strahlen verursacht werden. Als flach soll dabei der Bereich gelten, der in einem Winkel von 60° bis 90° bezüglich einer Flächennormalen der Oberfläche der Blendenwalze auf die Blendenwalze auftrifft.

In einer bevorzugten Ausgestaltung werden die Licht streuenden und/oder Licht absorbierenden Elemente durch eine Aufrauung der Oberfläche der Blendenwalze erzeugt. Alternativ oder ergänzend werden Licht streuende und/oder Licht absorbierende Elemente durch eine Mikrostrukturierung der Blendenoberfläche verwirklicht. Sowohl die Aufrauung der Oberfläche als auch ihre Mikrostrukturierung bewirken eine Streuung des auf die Oberfläche auftreffenden Lichtes, so dass das von der Oberfläche der Blendenwalze im Bereich der Aufrauung und/oder Mikrostrukturierung reflektierte Licht keine ausgeprägten Intensitätsmaxima oberhalb der Hell-Dunkel-Grenze aufweist.

Alternativ oder ergänzend ist bevorzugt, dass die Licht streuenden und/oder Licht absorbierenden Elemente Formelemente aufweisen, welche Reflexionen von Lichtstrahlen aus bestimmten Richtungen abschatten, so dass diese Lichtstrahlen nicht in die Bereiche der Lichtverteilung oberhalb der Hell-Dunkel-Grenze gelangen können. Die Licht abschattenden Formelemente auf der Oberfläche der Blendenwalze sind bevorzugt gezielt so ausgestaltet und angeordnet, dass sie eine sonst auftretende unerwünschte Helligkeit oberhalb der Hell-Dunkel-Grenze zumindest reduzieren. Das von den Formelementen abgeschattete Licht wird von den Formelementen absorbiert, an einer glatten Fläche der Formelemente einfach wegreflektiert oder mit einer entsprechenden Struktur, insbesondere einer Aufrauung oder Mikrostrukturierung der abschattenden Oberfläche, streuend reflektiert. Die Licht abschattenden Formelemente können zum Beispiel quaderförmig, würfelförmig, kugelsegmentförmig oder sägezahnförmig ausgebildet sein und eine Größe von 0,05mm bis 1 mm aufweisen.

Die Höhe der Formelemente kann über deren Längserstreckung auch variieren. Die Licht streuenden und/oder Licht absorbierenden Elemente werden vorzugsweise nach einem Verfahren auf die Oberfläche der Blendenwalze aufgebracht, das sich für eine kostengünstige, automatisierte Serienfertigung eignet. Besonders bevorzugt ist dabei ein Einbringen der Licht streuenden und/oder Licht absorbierenden Elemente durch Erodieren, Ätzen, Strahlen, Laserbearbeitung oder direktes Mikrofräsen in die Oberfläche der Blendenwalzen. Ganz besonders bevorzugt ist es aber, dass Negativformen der genannten Elemente in ein zur Herstellung der Blendenwalze genutztes Werkzeug eingebracht werden, so dass die damit hergestellten Blendenwalzen unmittelbar nach der Herstellung, ohne dass es eines weiteren Bearbeitungsschrittes bedarf, an den vorgesehenen Stellen die vorgesehenen Licht streuenden und/oder Licht absorbierenden Elemente aufweisen. Die erfindungsgemäße Blendenwalze aus Kunststoff eignet sich daher in besonderer Weise für die Verwirklichung solcher Strukturen, da diese direkt beim Spritzgießvorgang erzeugt werden können, was insbesondere wenig Aufwand erfordert und kostengünstig ist. Das Spritzgießen von Kunststoff hat den besonderen Vorteil, dass die genannten Strukturen in der Form abgebildet werden können und beim Spritzgießen direkt auf die Erzeugnisse übertragen werden.

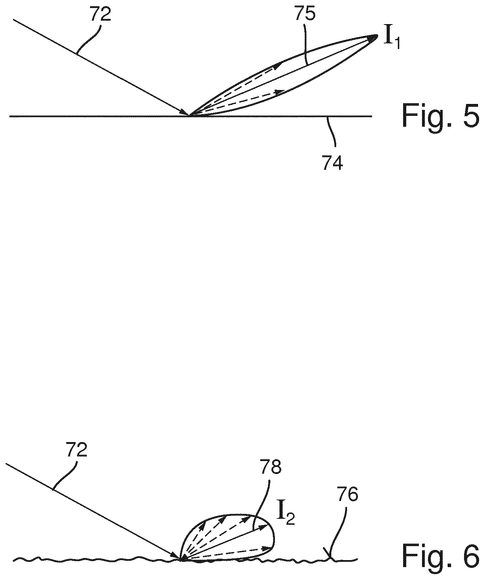

Bei der Blendenwalze 36 ist die Oberfläche in einer Ausgestaltung zumindest bereichsweise verspiegelt, beispielsweise um das beschriebene Overhead-Licht oder Sign-Light zu erzeugen. Generell gilt aber, dass die Oberfläche der Blendenwalze auch ohne eine besondere Verspiegelung reflektierende Eigenschaften hat, insbesondere für unter flachen Winkeln auf die Oberfläche auftreffende Lichtstrahlen. Figur 5 zeigt die Reflexion eines Lichtstrahls 72 an einer ebenen glatten Oberfläche 74. Unter diesen Umständen wird das reflektierte Licht 75 in einen vergleichsweise kleinen Raumwinkelbereich reflektiert. Figur 6 zeigt dagegen eine Reflexion eines Lichtstrahls 72 an einer aufgerauten oder mit einer Mikrostruktur 76 versehenen Oberfläche. Dabei wird das reflektierte Licht 78 in einen größeren Raumwinkelbereich gestreut, was durch eine Vielzahl kürzerer, gestrichelter Vektoren repräsentiert wird.

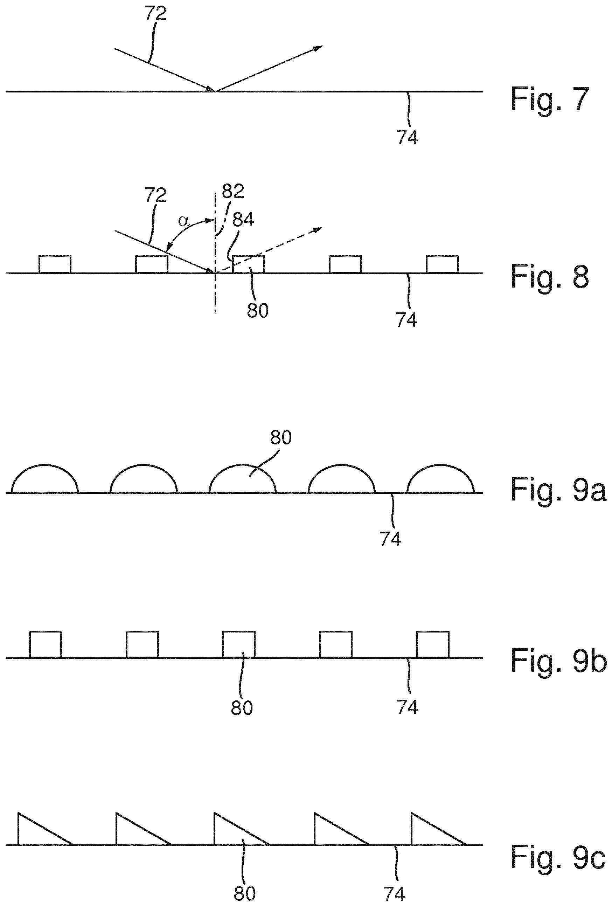

Figur 7 zeigt noch einmal die Reflexion eines Lichtstrahls 72 an einer ebenen und glatten Oberfläche 74 der Blendenwalze 36.

Figur 8 zeigt ein Ausführungsbeispiel, bei dem quaderförmig ausgestaltete und regelmäßig angeordnete Licht streuende und/oder Licht absorbierende Elemente 80 in Form von Licht abschattenden Formelementen auf der Oberfläche 74 angeordnet sind. Diese Formelemente schatten unter flachen Einfallswinkeln α einfallendes Licht ab, so dass es insbesondere knapp oberhalb der Hell-Dunkel-Grenze der resultierenden Lichtverteilung zu einer gewollt verringerten Helligkeit kommt. Die Licht abschattenden Formelemente 80 haben bevorzugt eine Höhe im Bereich von 0,05 mm bis 1 mm. Die abschattende Fläche 84 der Formelemente 80, die hier parallel zur Flächennormalen 82 der Fläche 74 liegt, kann glatt ausgestaltet sein oder sie kann auch mit einer Aufrauung oder Mikrostrukturierung versehen sein.

Weitere mögliche Ausgestaltungen der Licht abschattenden Formelemente sind in der Figur 9 dargestellt, wobei die Darstellung der Figur 9 nicht als abschließend verstanden werden soll. Gemäß dem Ausführungsbeispiel aus der Figur 9a sind die Formelemente in einem Querschnitt in der Zeichenebene zylinderabschnittsförmig oder kugelsegmentförmig ausgestaltet. Die zu dem reflektierten Lichtstrahl hingerichtete Fläche der Formelemente hat somit die Form einer Zylinder- oder Kugeloberfläche. Gemäß dem Ausführungsbeispiel aus Figur 9b sind die Formelemente im Querschnitt würfelförmig ausgestaltet. Die den reflektierten Lichtstrahlen zugewandte Fläche der Formelemente ist dabei, wie bei dem Ausführungsbeispiel aus Figur 8, eben und im Wesentlichen senkrecht zur Oberfläche 74 ausgestaltet. Schließlich zeigt Figur 9c eine weitere Ausgestaltung, bei der die Licht absorbierenden Formelemente sägezahnförmig ausgestaltet sind. Auch in diesem Fall steht die abschattende Fläche 84 im Wesentlichen senkrecht zu der Oberfläche 74 der Blendenwalze 36.

## Patentansprüche

1. Projektions-Lichtmodul (14; 28) eines Kraftfahrzeugscheinwerfers (10), das eine Lichtquelle (20; 30), eine Primäroptik, eine Blendenwalze (36) und eine Sekundäroptik aufweist, wobei die Primäroptik dazu eingerichtet ist, Licht der Lichtquelle (20; 30) in eine erste Lichtverteilung zu bündeln, die Blendenwalze (36) dazu eingerichtet ist, die erste Lichtverteilung mit einer quer zur Lichtausbreitung liegenden abschattend wirksamen Blendenkante (44; 44.1, 44.2, 44.3) räumlich zu begrenzen, wobei die Blendenwalze drehbar und so geformt ist, dass sich je nach Drehstellung der Blendenwalze verschiedene Lagen der abschattend wirksamen Blendenkante ergeben, und wobei die Sekundäroptik auf die erste Lichtverteilung fokussiert und dazu eingerichtet ist, die von der Blendenwalze begrenzte erste Lichtverteilung als zweite Lichtverteilung in das Vorfeld des Scheinwerfers zu projizieren, **dadurch gekennzeichnet, dass** die Blendenwalze aus einem Verbundmaterial aus Kunststoff mit in den Kunststoff eingebetteten Zusätzen verwirklicht ist, wobei die Zusätze die Wärmeleitfähigkeit des Verbundmaterials gegenüber dem reinen Kunststoff erhöhen, und dass ein Ende (50) der Blendenwalze (36) mit einem Gleitlager in einem Lagermodul (52) gelagert ist, welches Lagermodul (52) mit einem zweiten Teil (27) eines zweiteiligen Trägerelements (21) oder eines einteiligen, aus zwei unterschiedlichen und unlösbar miteinander verbundenen Trägerstrukturen bestehenden Trägerelements (21) verbunden ist, wobei ein erster Teil (25) aus Metall besteht und der zweite Teil (27) ein auf Kunststoffmaterial basierendes Verbundmaterial enthält, das eine Wärmeleitfähigkeit besitzt, die größer ist als die Wärmeleitfähigkeit des Kunststoff-Basismaterials ist und dass das Lagermodul (52) aus einem gut als Gleitlager geeigneten Kunststoffmaterial besteht, so dass die unter Umständen abrasiven Materialen der Blendenwalze und des Trägerelements 21 keinen Reibungskontakt miteinander haben.

2. Lichtmodul nach Anspruch 1, **dadurch gekennzeichnet, dass** das Kunststoffmaterial ein Polyetherimid ist.

3. Lichtmodul nach einem der vorhergehenden Ansprüche, **dadurch gekennzeichnet, dass** das Verbundmaterial Kohlefasern enthält.

4. Lichtmodul nach einem der vorhergehenden Ansprüche, **dadurch gekennzeichnet, dass** das Verbundmaterial Metalloxide enthält.

5. Lichtmodul nach Anspruch 4, **dadurch gekennzeichnet, dass** die Metalloxide eine Pulverform besitzen.

6. Lichtmodul nach einem der vorhergehenden Ansprüche, **dadurch gekennzeichnet, dass** die Zusätze so klein gemahlen sind, dass sie zusammen mit dem Kunststoffmaterial in einem Spritzgussvorgang verarbeitet werden können.

7. Lichtmodul nach einem der vorhergehenden Ansprüche, **dadurch gekennzeichnet, dass** das Projektionsmodul ein Kühlgebläse aufweist und dass wenigstens ein Teil der vom Kühlluftgebläse geförderten Kühlluft so geführt wird, dass sie zumindest auch Wärme von der Blendenwalze abführt.

8. Lichtmodul nach Anspruch 7, **dadurch gekennzeichnet, dass** das Lichtmodul dazu eingerichtet ist, einen von einem Gebläse erzeugten Kühlluftstrom so zu führen, dass die Blende zumindest zu einem Teil in dem Kühlluftstrom liegt.

## Claims

1. Projection light module (14; 28) of a motor vehicle headlamp (10), which has a light source (20; 30), a primary optic, a shutter roll (36) and a secondary optic, the primary optic being set up to bundle light from the light source (20; 30) into a first light distribution, the shutter roll (36) being set up to delimit the first light distribution spatially with a shutter edge (44; 44.1, 44.2, 44.3) which lies transversely to the light propagation and which has a shading effect, wherein the shutter roll is rotatable and is shaped in such a way that different positions of the shutter edge having a shading effect are produced depending on the rotational position of the shutter roll, and wherein the secondary optics is focused on the first light distribution and is set up to project the first light distribution delimited by the shutter roll as a second light distribution into the field in front of the headlamp, **characterized in that** the shutter roll is realized from a composite material of plastic with additives embedded in the plastic, the additives increasing the thermal conductivity of the composite material compared to the pure plastic, and **in that** one end (50) of the shutter roll (36) is mounted with a sliding bearing in a bearing module (52), which bearing module (52) is connected to a second part (27) of a two-part carrier element (21) or a one-part carrier element (21) consisting of two different and non-detachably connected carrier structures, a first part (25) consisting of metal and the second part (27) containing a composite material based on plastic material, which has a thermal conductivity which is greater than the thermal conductivity of the plastic base material and that the bearing module (52) consists of a plastic material which is well suited as a sliding bearing material, so that the possibly abrasive materials of the shutter roll and the support element (21) do not have any frictional contact with each other.

2. Light module according to claim 1, **characterized in that** the plastic material is a polyetherimide.

3. Light module according to any of the preceding claims, **characterized in that** the composite material contains carbon fibres.

4. Light module according to one of the preceding claims, **characterized in that** the composite material contains metal oxides.

5. Light module according to claim 4, **characterized in that** the metal oxides have a powder form.

6. Light module according to one of the preceding claims, **characterized in that** the additives are ground so small that they can be processed together with the plastic material in an injection moulding process.

7. Light module according to one of the preceding claims, **characterized in that** the projection module has a cooling fan and that at least part of the cooling air conveyed by the cooling air fan is guided in such a way that it at least also dissipates heat away from the shutter roll.

8. Light module according to claim 7, **characterized in that** the light module is adapted to guide a cooling air flow generated by a fan in such a way that the screen is at least partly located in the cooling air flow.

## Revendications

1. Module lumineux de projection (14; 28) d'un projecteur de véhicule automobile (10), qui présente une source de lumière (20; 30), une optique primaire, un cylindre de diaphragme (36) et une optique secondaire, dans lequel l'optique primaire est conçue pour focaliser la lumière de la source de lumière (20; 30) dans une première distribution de lumière, le cylindre de diaphragme (36) est conçu pour délimiter spatialement la première distribution de lumière avec un bord de diaphragme (44; 44.1, 44.2, 44.3) à effet d'atténuation situé transversalement à la propagation de la lumière, dans lequel le cylindre de diaphragme est rotatif et formé de sorte que, en fonction de la position de rotation du cylindre de diaphragme, différentes positions du bord de diaphragme à effet d'atténuation sont obtenues, et dans lequel l'optique secondaire effectue une focalisation sur la première distribution de lumière et est conçue pour projeter la première distribution de lumière délimitée par le cylindre de diaphragme en tant que deuxième distribution de lumière dans la zone située devant le projecteur, **caractérisé en ce que** le cylindre de diaphragme est réalisé à partir d'un matériau composite en matière plastique avec des additifs incorporés dans la matière plastique, dans lequel les additifs augmentent la conductibilité thermique du matériau composite par rapport à la matière plastique pure, et qu'une extrémité (50) du cylindre de diaphragme (36) est montée avec un palier lisse dans un module de palier (52), lequel module de palier (52) est relié à une deuxième partie (27) d'un élément de support (21) en deux parties ou d'un élément de support (21) d'une seule pièce, constitué de deux structures de support différentes et reliées l'une à l'autre de manière indétachable, dans lequel une première partie (25) est constituée de métal et la deuxième partie (27) contient un matériau composite à base de matière plastique, qui possède une conductibilité thermique qui est supérieure à la conductibilité thermique du matériau de base en matière plastique et que le module de palier (52) est constitué d'une matière plastique convenant bien comme palier lisse, de sorte que les matières le cas échéant abrasives du cylindre de diaphragme et de l'élément de support 21 ne présentent pas de contact de frottement les unes avec les autres.

2. Module lumineux selon la revendication 1, **caractérisé en ce que** la matière plastique est un polyétherimide.

3. Module lumineux selon l'une quelconque des revendications précédentes, **caractérisé en ce que** le matériau composite contient des fibres de carbone.

4. Module lumineux selon l'une quelconque des revendications précédentes, **caractérisé en ce que** le matériau composite contient des oxydes métalliques.

5. Module lumineux selon la revendication 4, **caractérisé en ce que** les oxydes métalliques possèdent une forme de poudre.

6. Module lumineux selon l'une quelconque des revendications précédentes, **caractérisé en ce que** les additifs sont broyés si finement qu'ils peuvent être traités conjointement avec la matière plastique au cours d'un processus de moulage par injection.

7. Module lumineux selon l'une quelconque des revendications précédentes, **caractérisé en ce que** le module de projection présente un ventilateur de refroidissement et qu'au moins une partie de l'air de refroidissement transporté par le ventilateur d'air de refroidissement est guidée de sorte qu'elle évacue au moins également de la chaleur du cylindre de diaphragme.

8. Module lumineux selon la revendication 7, **caractérisé en ce que** le module lumineux est conçu pour guider un courant d'air de refroidissement produit par un ventilateur, de sorte que le diaphragme se situe au moins en partie dans le courant d'air de refroidissement.
